# EUROPÄISCHE PATENTSCHRIFT

(11) **EP 2 473 437 B1**
(45) Veröffentlichungstag und Bekanntmachung des Hinweises auf die Patenterteilung: **01.04.2015**
(21) Anmeldenummer: 10732666.2
(22) Anmeldetag: 08.07.2010
(51) Int. Cl.: B67C 3/24, B65G 47/90

(54) **GREIFER ZUM HALTEN VON GEFÄSSEN WIE PET-FLASCHEN**
GRIPPER FOR RETAINING CONTAINERS SUCH AS PET BOTTLES
PINCE POUR TENIR DES RÉCIPIENTS COMME DES BOUTEILLES EN PET

(30) Priorität: 31.08.2009 DE 102009038988
(43) Veröffentlichungstag der Anmeldung: 11.07.2012
(73) Patentinhaber: KHS GmbH, 44143 Dortmund (DE)
(72) Erfinder: BODTLÄNDER, Renate, 55452 Guldental (DE); MOSER, Anke, 55627 Merxheim (DE)
(86) Internationale Anmeldenummer: PCT/EP2010/004164
(87) Internationale Veröffentlichungsnummer: WO 2011/023260

(56) Entgegenhaltungen:
- DE-A1-102005 041 929

## Beschreibung

Die Erfindung richtet sich auf einen Greifer zum Halten von Gefäßen wie PET-Flaschen gemäß dem Oberbegriff des Anspruchs 1 und wie aus der DE 10 2005 041 929 A1 bekannt, wobei die Greiferarme zwischen der Drehachse und dem freien Klauenende und das Tragelement für die Greifarme zum Schließen und/oder zum Zentrieren Aufnahmen für Dauermagnete aufweisen.

Auf dem hier interessierenden Sektor der Flaschenfüllanlagen gibt es eine Reihe von Greifer- oder Halterlösungen, die sich u.a. auch insbesondere auch zur Aufbringung von Schließkräften der Dauermagenttechnologie bedienen. Lediglich als Beispiel sei dabei auf die DE 10 2005 041 929 A1, DE 10 2005 014 838 A1, DE 20 2005 002 924 U1 oder die US 6 386 609 B1 verwiesen. Dem Stand der Technik ist gemeinsam, dass in der Regel hier lediglich die Schließkräfte durch die Magnete optimiert werden sollen.

Aufgabe der Erfindung ist die Schaffung einer Lösung, mit der sowohl die Schließkräfte über Magnete aufgebracht werden sollen wie auch die Zentrierung der Greifer an einem Stern oder einem ähnlichen Maschinenelement oder auch der Schutz vor Überbeanspruchung gemindert werden soll.

Mit einem Greifer der eingangs bezeichneten Art wird diese Aufgabe durch einen Greifer Gemäß Anspruch 1 gelöst.

Durch die Erfindung wird erreicht, dass die Flaschenklammern durch die sich anziehenden Magnete zentriert werden, wobei abstoßende Magnete an einem weiteren Element, z.B. an einem Lagerteil positioniert sind, so dass sich eine seitlich elastische Lagerung des gesamten Greiferarmsystemes ergibt. Sitzt eine Flasche im Greifer, so gewährleistet die Kraft der Magnete einen sicheren Transport, wobei die Zentrierung der Greifer völlig ohne Federn auskommt, was eine sehr hygienische Gestaltung des entsprechenden Systemes mit sich bringt.

Ausgestaltungen der Erfindung ergeben sich aus den Unteransprüchen. Dabei kann vorgesehen sein, dass zwischen der Ebene der Magneten in den Greiferarmen und der Magnete in dem Tragelement eine weitere schwenkbare Tragplatte mit zwei weiteren Paaren von Dauermagneten vorgesehen ist.

Durch die zwischengelagerte weitere mit Dauermagneten ausgerüstete, schwenkbare Tragplatte können weitere Funktionen in das System eingebracht werden. Nicht nur die Zentrierung der Greiferarme, sondern, wie oben schon erwähnt, auch die elastische Lagerung durch abstoßende Magnete. Dabei besteht die weitere Ausgestaltung der Erfindung darin, dass alle Dauermagnete, die in der Gebrauchslage im Wesentlichen in den drei Ebenen übereinander positioniert sind, die gleiche Pol-Anordnung (z.B. N-S, N-S, N-S) aufweisen, wobei benachbarte Magnetreihen eine entgegengesetzte Pol-Anordnung (z.B. S-N, S-N, S-N) aufweisen.

In Ausgestaltung der Erfindung ist auch vorgesehen, dass die Schwenkachsen der Greiferarme im Zwischenelement und die Schwenkachse der Zwischenplatte in der Tragplatte bzw. am Stern fixiert sind.

Ein weiterer Vorteil der Erfindung besteht darin, dass bei Auftreten großer seitlicher Belassung, etwa durch einen Schaden im System, auch die Greifer der Last ausweichen können, und zwar ohne dass dazu Rückstellfedern oder ähnliche Elemente notwendig wären. Dies kann durch die Überwindung einer mechanischen Sperre mit ggf. entsprechender Rückführung durch die Magnetkräfte erfolgen, wie dies die Erfindung ebenfalls vorsieht.

Eine vorteilhafte Ausgestaltung der Erfindung besteht darin, dass jeder Außenmagnet jedes Magnetpaares in radialer Richtung gegenüber dem zugeordneten Außenmagneten einer anderen Ebene zur Ausübung einer Zentrierkraft in Richtung auf die Schwenkachsen der Greiferarme bzw. der Zwischenplatte leicht versetzt angeordnet ist.

Neben dem erfindungsgemäßen Greifer sieht die Erfindung auch eine Transportvorrichtung vor für PET-Flaschen oder andere, durch Greifer erfassbare Gefäße, die sich durch entsprechende erfindungsgemäße Greifer auszeichnet.

Weitere Merkmale, Einzelheiten und Vorteile der Erfindung ergeben sich aufgrund der nachfolgenden Beschreibung sowie anhand der Zeichnung. Diese zeigt in
- Fig. 1: eine Ansicht eines erfindungsgemäßen Greifers,
- Fig. 2: und 3 Explosionsdarstellungen des erfindungsgemäßen Greifers in unterschiedlichen Ansichten,
- Fig. 4: einen Querschnitt durch einen erfindungsgemäßen Greifer auf der durch die Dauermagneten bestimmten Ebene sowie in
- Fig. 5: in der Darstellung der Fig. 1 eine Aufsicht auf den Greifer in abgeschwenkter, durch eine evtl. Störung entstandene Position.

Der in den Figuren allgemein mit 1 bezeichnete Greifer zum Halten und Greifen von beispielsweise PET-Flaschen - was in den Figuren nicht näher dargestellt ist-weist zwei Greiferarme 2 und 3 auf, die je um eine Schwenkachse 4 und 5 verschwenkbar sind und an die im dargestellten Beispiel zwischen diesen Schwenkachsen 4 und 5 und den Klauenenden 2a und 3a der Greifer arme 2 und 3 positionierte Ansätze 6 und 7 auf, die je mit einem Paar Dauermagneten ausgerüstet sind, wobei die Dauermagneten in Hülsen in dem jeweils entsprechenden Kunststoffkörper eingesetzt sind.

Zur leichteren Beschreibung der, wie sich aus der weiteren Beschreibung ergibt, in unterschiedlichen Ebenen angeordneten Dauermagneten, sind diese mit 8, 9, 10 und 11 in einer Ebene gezeichnet, in der weiteren Ebene ergänzt durch den Buchstaben "a" bzw. "b". Die Hülsen sind durchgängig mit 12 bezeichnet.

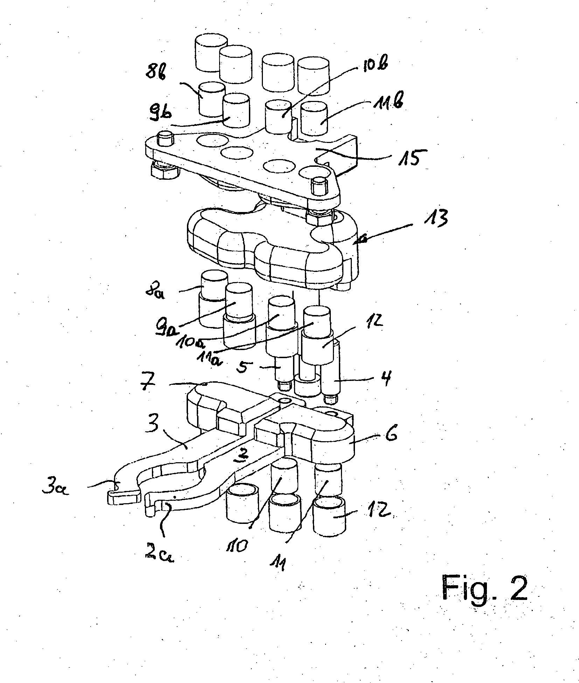

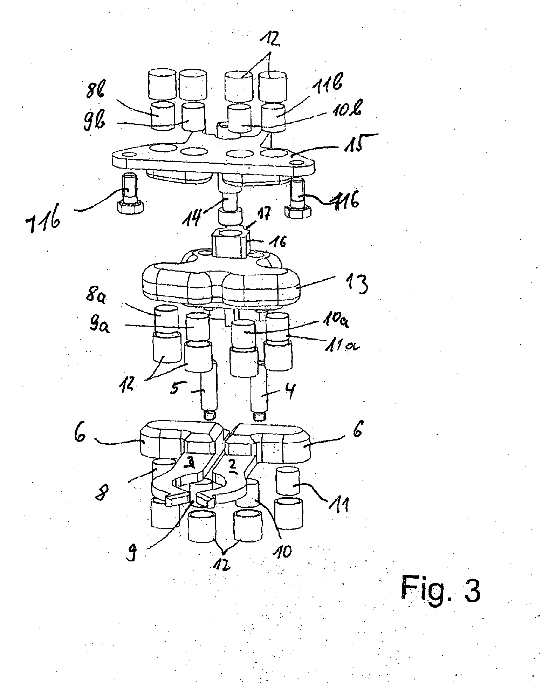

Wie sich insbesondere aus den Fig. 2 und 3 ergibt, sind die Schwenkachsen 4 und 5 in einer allgemein mit 13 bezeichneten weiteren schwenkbaren Tragplatte verschraubt, die ihrerseits mittels Drehachse 14 an einer Tragplatte 15 drehbar befestigt ist, die ihrerseits über Schrauben 116 an einem weiteren, in den Figuren nicht näher dargestellten Maschinenelement befestigt ist, z.B. einem Stern od. dgl. Die Drehachse 14 des Zwischenelementes 13 kann entweder an einer Tragplatte 15 oder an dem jeweiligen Maschinenelement befestigt sein, was in den Figuren nicht näher dargestellt ist.

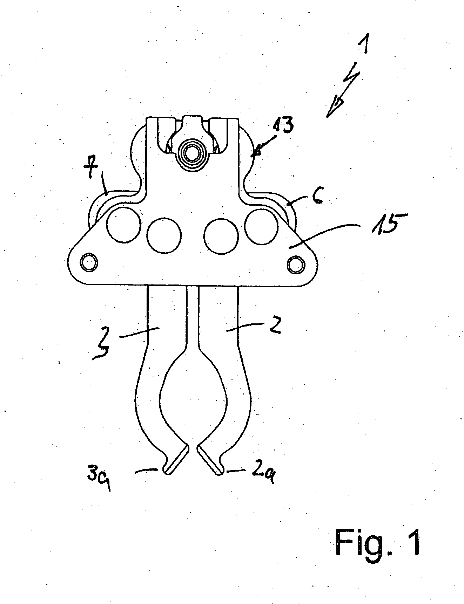

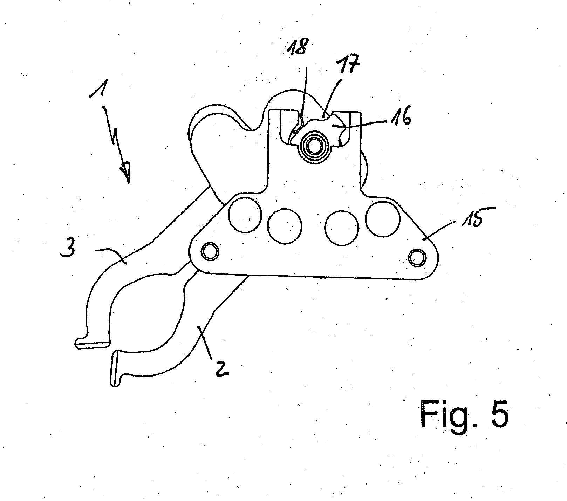

Das Zwischenelement 13 weist einen angeformten mit Durchgangsbohrungen versehenen Nocken 16 auf, der seitliche Rasteinbuchtungen 17 aufweist, die mit einem Rastkörper 18 z.B. am in der Tragplatte 15 derart zusammenwirken, dass bei Überschreitung einer bestimmten seitlichen Kraft der Greifer 1 auf seiner in Fig. 1 dargestellten Gebrauchslage bzw. Arbeitsstellung in die der Kraft ausweichende, in Fig. 5 wiedergegebene Stellung verschwenkt wird.

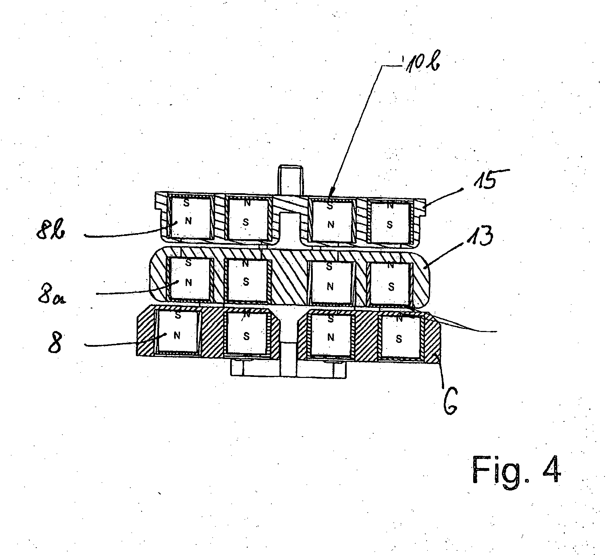

Die Pol-Anordnung der einzelnen Magnete in den einzelnen Magnete ist in Fig. 4 angedeutet. So weisen die übereinander liegenden, in einer Reihe positionierten Magnete, z.B. die Magnete 8, 8a und 8b die gleiche Pol-Anordnung derart auf, dass die benachbarten Magnete sich anziehen, während die in einer Horizontalebene nebeneinander angeordneten Magnete in die jeweils wechselnde Pol-Anordnung bzw. Pol-Ausrichtung aufweisen.

## Patentansprüche

1. Greifer (1) mit zwei greifarme (2,3), die je ein freies Klauenende (2a,3a) aufweisen und um ein Schwenkachse (4,5) verschwenkbar sind, zum Halten von Gefäßen wie PET-Flaschen, und ein Tragelement (15), wobei die Greiferarme (2,3) zwischen der Schwenkachse (4,5) und dem freien Klauenende (2a,3a) und das Tragelement (15) für die Greifarme (2,3) zum Schließen und/oder zum Zentrieren Aufnahmen (6,7) für Dauermagnete (8,8b,9,9b,10,10b,11,11b) aufweisen,
**dadurch gekennzeichnet, dass** die Schwenkachsen (4,5) der Greiferarme (2,3) in einer Zwischenplatte (13) und eine Drehachse (14) der Zwischenplatte (13) in dem Tragelements (15) bzw. an einem Stern fixiert sind, und
dass jeder Greiferarm (2,3) in einer Ebene ein Paar von Dauermagneten (8,9;10,11) und das Tragelement (15) in einer Ebene zwei zugeordnete Paare von Dauermagneten (8a,9a;10a,11a) in paralleler Ausrichtung zur Schwenkachse (4,5) aufweist, wobei jeder Dauermagnet zu benachbarten Dauermagneten in horizontaler und/oder vertikaler Zuordnung eine entgegengesetzte Polung aufweist.

2. Greifer nach Anspruch 1, **dadurch gekennzeichnet, dass** zwischen der Ebene der Dauermagnete (8-11) in den Greiferarmen (2,3) und der Dauermagnete (8b-11b) in dem Tragelement (15) die weitere schwenkbare Zwischenplatte (13) mit in einer Ebene zwei weiteren Paaren von Dauermagneten (8a-11a) vorgesehen ist.

3. Greifer nach Anspruch 1 oder 2, **dadurch gekennzeichnet, dass** alle in einer Arbeidsstellung im Wesentlichen übereinander liegenden Dauermagneten (z.B. 8,8a,8b) der drei Ebenen eine gleiche Pol-Anordnung (z.B. N-S, N-S, N-S) aufweisen, wobei in vertikaler Zuordnung benachbarte Dauermagnetreihen eine entsprechend entgegengesetzte Pol-Anordnung (z.B. S-N, S-N, S-N) aufweisen.

4. Greifer nach einem der vorangehenden Ansprüche, **dadurch gekennzeichnet, dass** eine mechanische Rast- oder Klemmanordnung (16-18) zur Positionierung der Greiferarme (2,3) in einer Arbeitsstellung und der bei seitlicher Überbelastung mitschwenkbaren Zwischenplatte (13) vorgesehen ist.

5. Greifer nach einem der vorangehenden Ansprüche, **dadurch gekennzeichnet, dass** jeder Außenmagnet (8 bzw. 11) jedes Magnetpaares in einer Ebene in radialer Richtung gegenüber dem zugeordneten Außenmagneten (8a bzw. 11a) einer anderen Ebene zur Ausübung einer Zentrierkraft in Richtung auf die Schwenkachsen (4,5) der Greiferarme (2,3) bzw. die Drehachse (14) der Zwischenplatte (13) leicht versetzt angeordnet ist.

6. Transportvorrichtung für PET-Flaschen oder andere, durch Greifer erfassbare Gefäße, gekennzeichnet durch einen Greifer (1) nach einem der vorangehenden Ansprüche.

## Claims

1. Gripper (1) with two gripper arms (2, 3) which each have a free claw end (2a, 3a) and can be pivoted about a pivot axis (4, 5), for holding containers such as PET bottles, and a carrier element (15), wherein between the pivot axis (4, 5) and the free claw end (2a, 3a), the gripper arms (2, 3) and the carrier element (15) for the gripper arms (2, 3) have receptacles (6, 7) for permanent magnets (8, 8b, 9, 9b, 10, 10b, 11, 11 b) for closing and / or centring, **characterised in that** the pivot axes (4, 5) of the gripper arms (2, 3) are secured in an intermediate plate (13) and a rotational axis (14) of the intermediate plate (13) is secured in the carrier element (15) or on a star, and that each gripper arm (2, 3) comprises on one level a pair of permanent magnets (8, 9, 10, 11) and the carrier element (15) comprises on one level two associated pairs of permanent magnets (8a, 9a, 10a, 11a) in a parallel orientation to the pivot axis (4, 5), wherein the pole of each permanent magnet is opposite that of the adjacent permanent magnets in a horizontal and / or vertical association.

2. Gripper according to claim 1, **characterised in that** between the level of the permanent magnets (8 - 11) in the gripper arms (2, 3) and the permanent magnets (8b - 11 b) in the carrier element (15), the other pivotable intermediate plate (13) is provided with on one level two further pairs of permanent magnets (8a - 11 a).

3. Gripper according to claim 1 or 2, **characterised in that** all permanent magnets (e.g. 8, 8a, 8b) substantially lying one over the other in a working position on the three levels have the same pole arrangement (e.g. N-S, N-S, N-S), wherein adjacent rows of permanent magnets in a vertical association have an opposite pole arrangement (e.g. S-N, S-N, S-N) in vertical association.

4. Gripper according to any one of the preceding claims, **characterised in that** a mechanical engaging or clamping arrangement (16 - 18) is provided for positioning the gripper arms (2, 3) in a working position and the intermediate plate (13) which can also pivot in the event of a lateral overload.

5. Gripper according to any one of the preceding claims, **characterised in that** each outer magnet (8 and 11) of each pair of magnets on one level is arranged slightly offset in a radial direction relative to the associated outer magnet (8a and 11 a) on another level to exert a centring force in the direction of the pivot axes (4, 5) of the gripper arms (2, 3) and the rotational axis (14) of the intermediate plate (13).

6. Transport device for PET bottles or other containers which can be grasped by grippers, **characterised by** a gripper (1) according to any one of the preceding claims.

## Revendications

1. Pince (1) comprenant deux branches de pince (2, 3), qui présentent respectivement une extrémité de griffe (2a, 3a) libre et qui peuvent pivoter autour d'un axe de pivotement (4, 5), servant à maintenir des récipients tels que bouteilles en PET, et un élément de support (15), sachant que les branches de pince (2, 3) entre l'axe de pivotement (4, 5) et l'extrémité de griffe (2a, 2a) libre d'une part et l'élément de support (15) pour les branches de pinces (2, 3) d'autre part présentent des logements (6, 7) pour des aimants permanents (8, 8b, 9, 9b, 10, 10b, 11, 11 b) aux fins de la fermeture et/ou du centrage,
**caractérisée en ce que** les axes de pivotement (4, 5) des banches de pince (2, 3) sont fixés dans une plaque intermédiaire (13) et un axe de rotation (14) de la plaque intermédiaire (13) est fixé dans l'élément de support (15) ou au niveau d'une étoile, et
**en ce que** chaque branche de pince (2, 3) présente, dans un plan, une paire d'aimants permanents (8, 9 ; 10, 11) et l'élément de support (15) présente, dans un plan, deux paires associées d'aimants permanents (8a, 9a ; 10a, 11a) selon une orientation parallèle par rapport à l'axe de pivotement (4, 5), sachant que chaque aimant permanent présente par rapport aux aimants permanents adjacents selon une association horizontale et/ou verticale une polarité opposée.

2. Pince selon la revendication 1, **caractérisée en ce que** la plaque intermédiaire (13) supplémentaire pouvant pivoter pourvue de deux autres paires d'aimants permanents (8a - 11 a) est prévue entre le plan des aimants permanents (8 - 11) dans les branches de pince (2, 3) et les aimants permanents (8b - 11b) dans l'élément de support (15).

3. Pince selon la revendication 1 ou 2, **caractérisée en ce que** tous les aimants permanents (par exemple 8, 8a, 8b), essentiellement superposés les uns sur les autres dans une position de fonctionnement, des trois plans présentent un ensemble de bornes polaires (par exemple N-S, N-S, N-S) identique, sachant que des rangées d'aimants permanents adjacentes selon une association verticale présentent un ensemble de bornes polaires (par exemple S-N, S-N, S-N) opposé de manière correspondante.

4. Pince selon l'une quelconque des revendications précédentes, **caractérisée en ce qu'**un ensemble mécanique d'enclenchement ou de serrage (16 - 18) est prévu afin de positionner les branches de pince (2, 3) dans une position de fonctionnement et la plaque intermédiaire (13) entraînée par pivotement en présence d'une surcharge latérale.

5. Pince selon l'une quelconque des revendications précédentes, **caractérisée en ce que** chaque aimant extérieur (8 ou 11) de chaque paire d'aimants est disposé de manière légèrement décalée dans un plan, dans le sens radial par rapport à l'aimant extérieur (8a ou 11a) associé d'un autre plan afin d'exercer une force de centrage en direction des axes de pivotement (4, 5) des branches de pince (2, 3) ou de l'axe de rotation (14) de la plaque intermédiaire (13).

6. Dispositif de transport pour des bouteilles en PET ou autres, pour des récipients pouvant être saisis par la pince, **caractérisé par** une pince (1) selon l'une quelconque des revendications précédentes.
